# EUROPEAN PATENT APPLICATION

(11) **EP 0 779 028 A2**
(43) Date of publication of application: **18.06.1997**
(21) Application number: 97101592.0
(22) Date of filing: 28.02.1994
(51) Int. Cl.: A01K 45/00, A22C 21/00

(54) **A slaughter shackle, a poultry catching means and a method for suspending live poultry by the legs**

(30) Priority: 01.03.1993 DK 224/93
(62) Divisional of application: 94908981.7
(71) Applicant: POUTECH A/S, DK-8200 Arhus N (DK)
(72) Inventor: Nielsen, Holger Hjort, 4070 Kirke Hyllinge (DK); Sorensen, Torben Brandt, 5540 Ullerslev (DK); Brodsgaard, Ole, 5700 Svendborg (DK); Jensen, Verner Trygved, 2730 Herlev (DK); Knudsen, Arne, 5771 Stenstrup (DK)
(74) Representative: Raffnsöe, Knud Rosenstand

(57) **Abstract**

By the method a piece of poultry (26) is caught by the legs in that a flat catching means (28) with two openings each associated to a bottom part with substantially parallel side edges is moved towards the legs of the poultry, so that the legs pass through each their opening to the bottom part and are moved along by the catching means (28) which thereafter is rotated around a horizontal axis (38) so, that the poultry is suspended with the head downwards. The catching means (28) with the poultry (26) is brought to a position, in which the bottom parts of the catching means (28) are placed over a part of a suspended slaughter shackle (48) comprising two upwardly open and downwardly closed slits that are open vertically upwards from said part which upwardly extends out from a plane of the slaughter shackle (48) that is vertical in use, the legs extending through each their slit. Thereafter the poultry (26) is released from the catching means (28) whereby the legs of the poultry (26) slide through the slits until they are stopped by the feet.

## Description

The invention relates to a slaughter shackle, a poultry-catching means and a method for suspending live poultry, particularly chickens, by the legs.

A method of said kind is disclosed in WO-A-92/20223 according to which a chicken carried with its legs hanging down is caught by these by means of a planar slaugther shackle which in a horizontal position is moved in its plane and having caught the chicken by the legs is turned through 90° so that the chicken is suspended with its head hanging down. Without further explanation an alternative embodiment of the slaughter shackle is shown comprising a flat portion with two inwardly converging openings placed side by side and each associated to a key-hole shaped bottom part, which is mounted perpendicular to a shaft to be moved according to an arrow in a direction transverse to the shaft. Presumably the flat portion vill extent substantially horizontally when this slaughter shackle has been turned around to carry a chicken by the legs.

In many existing slaughterhouse the live chickens are suspended by their legs in socalled slaughter shackles suspended in a conveyor chain. By means of the conveyor chain the chickens are passed round in the slaughterhouse where they are killed de-feathered, cleaned etc. The suspension of the live chickens is today frequently effected manually which is a monotonous and fatiguing work.

The object of the present invention is to provide a slaughter shackle, a catching means and a method, whereby poultry may be suspended by the legs. This is obtained by a slaughter shackle in accordance with claim 1, a catching means in accordance with claim 2 and a method in accordance with claim 3.

A catching means for use in carrying out the method according to the invention is characterized by comprising a flat portion with two inwardly converging openings placed side by side and each associated to a bottom part with substantially parallel lateral edges and a bottom edge, that one lateral edge and/or the bottom edge of each bottom part is releasable so as to be movable after release away from the other edges, and that said portion is pivotal about a substantially horizontal axis. With such a catching means a chicken may be caught by the legs by passing the flat portion preferably from the front towards the legs of the chicken, so that the legs are passed into their respective opening and further into their respective bottom portion. When the bottom reaches the legs of the chicken, the legs are thus caught and the further movement of the flat portion moves the legs and the chicken away from the supporting means and the station. Then, the flat portion together with the chicken may rotate about the horizontal axis so that the chicken will be suspended with the head downwards. Thereafter the chicken may together with the catching means be passed to a desired position and be let off by releasing one lateral edge or the bottom edge of the bottom parts.

A slaughter shackle for use in carrying out the method and comprising an upper portion adapted to be suspended, for instance in a conveyor or chain, and a lower portion having two upwardly open and downwardly closed slits placed side by side, is according to the invention characterized in that the part of the slaughter shackle which includes the slits upwardly extends out from a plane of the slaughter shackle that is vertical in use, and that the slits are open vertically upwardly from said part. Such a design of the slaughter shackle makes it possible to pass a catching means with a downwards suspended chicken in over that part of the slaughter shackle which includes the slits whereby the chicken upon release of the catching means, will slide down into the slits with its legs and be firmly held by the feet.

The invention will now be explained in detail by means of examples with reference to the schematical drawings, in which
Fig. 1 shows the apparatus according to the invention, comprising a subdivided first conveyor,
Fig. 2 is a view corresponding to Fig. 1, but viewed from above,
Fig. 3 is a section along the line III-III in Fig. 2,
Fig. 4 is a side view of the chicken in Fig. 3,
Fig. 5 is a view of the chicken in Fig. 4, viewed form below together with a catching shackle,
Fig. 6 is a sectional view of a catching means according to the invention, viewed from above,
Fig. 7 is a slaughter shackle according to the invention, viewed from the side, and
Fig. 8 illustrates the slaughter shackle according to the invention, viewed from the front.

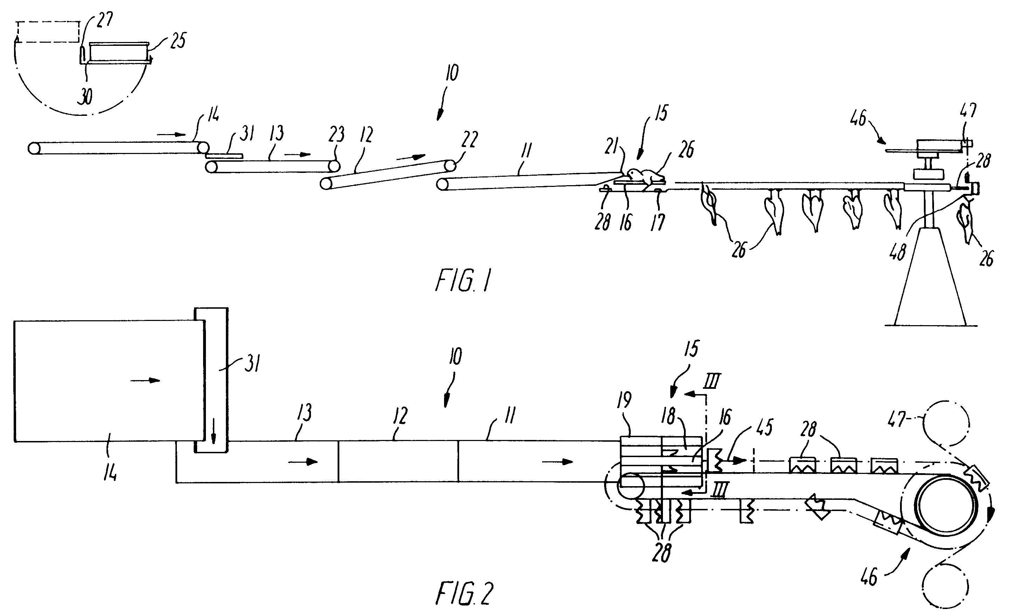

Figs. 1 and 2 show an apparatus comprising a first conveyor 10, divided into three subconveyors 11, 12 and 13. In the illustrated example said subconveyors are all belt conveyors and their direction of conveyance is from the left to the right, viewed in Figs 1 and 2. At the downstream end of the subconveyor 11 there is provided a collection station 15 with a supporting means which in the example is constituted by a stick 16 extending substantially horizontally in the longitudinal direction of the first conveyor in relation thereto and a distance below the level of the subconveyor 11 at the downstream end. The collector station 15, moreover includes a table 17 and lateral guide plates 18 and 19 which for the sake of clearness are not shown in Fig. 1.

The belts of the subconveyors 11, 12 and 13 are passed over rolls of which rolls 21, 22, 23 at the downstream ends of subconveyors 11, 12, 13, respectively, have diameters D1, D2 and D3. As it appears from Fig. 1 the subconveyors 11, 12, 13 overlap each other so that an object advanced on the subconveyor 13, will be passed over the end at the roll and fall down onto the subconveyor 12, similarly, as regards the transition from the subconveyor 12 to the subconveyor 11 and, likewise, as regards the transition from the subconveyor 12 to the subconveyor 11 per se similarly as regards the transition from the second conveyor 14 to the subconveyor 13.

To the left in Figs. 1 and 2 a receiver conveyor 14 with larger width than the first conveyor 10. A transportation box 25 placed in a suspension 30 with a horizontal axis of rotation 27 is shown in Fig. 1 above the receiver conveyor. Chickens arrived from a producer in the transportation box 25 are in the illustrated example transferred to the receiver conveyor 14 by rotating the transportation box with the device 30 about the axis 27 to the position shown in dashed lines. The rotation is effected quickly by means of a means not shown, so that the chickens substantially take a free fall down onto the receiver conveyor 14.

From the receiver conveyor 14 the chickens are passed on to an intermediate conveyor 31 extending below the downstream edge of the receiver conveyor 14 so that the chickens placed as a herd on the receiver conveyor 14 by means of the intermediate conveyor are passed individually to the first conveyor 10, the downstream edge of the intermediate conveyor 31 being positioned above the subconveyor 13 of the first conveyor 10 at the upstream end thereof.

When a chicken is passed from one conveyor to another and thus drops down a little, as is the case with the present apparatus, they will when passed over the end of a conveyor, try to remain on the conveyor. In their attempt they will turn their bill facing away from the direction of conveyance. It is this effect which according to the invention is utilized to make the chickens turn to face a determined direction. When the chickens from the receiver conveyor fall down onto the intermediate conveyor 31, whether or not they have had time to turn, they will sense the transverse movement of the intermediate conveyor, that is transverse in relation to the receiver conveyor, and they will probably attempt to counteract this movement and thereby turn round, their bill directed opposite to the direction of transportation of the intermediate conveyor. This will be repeated at the transition from the intermediate conveyor 31 to the subconveyor 13.

It is the experience of the inventors that the chickens after they have landed on a conveyor will quickly sit down. It varies from race to race and from chicken to chicken how quickly the chickens sit down.

The transition from the subconveyor 13 to the subconveyor 11 will make the chickens which do not already face their tail in the direction of conveyance turn to do so.

It has turned out that there is some connection between the speed of the belts of the subconveyors 11, 12, 13, the diameters of the rolls 21, 22, 23 and the temper of the race of the chickens in treatment to be taken into consideration in order to obtain the desired and described effect. In successful experiments carried out by the inventors there was used a speed of 0.1-1 m/s with diameters D2 and D3 in the interval about 5 to 30 cm for the subconveyors 12 and 13, whereas a speed of about 0,3-1,5 m/s and a diameter D1 in the interval about 3 to 20 cm was used for the subconveyor 11.

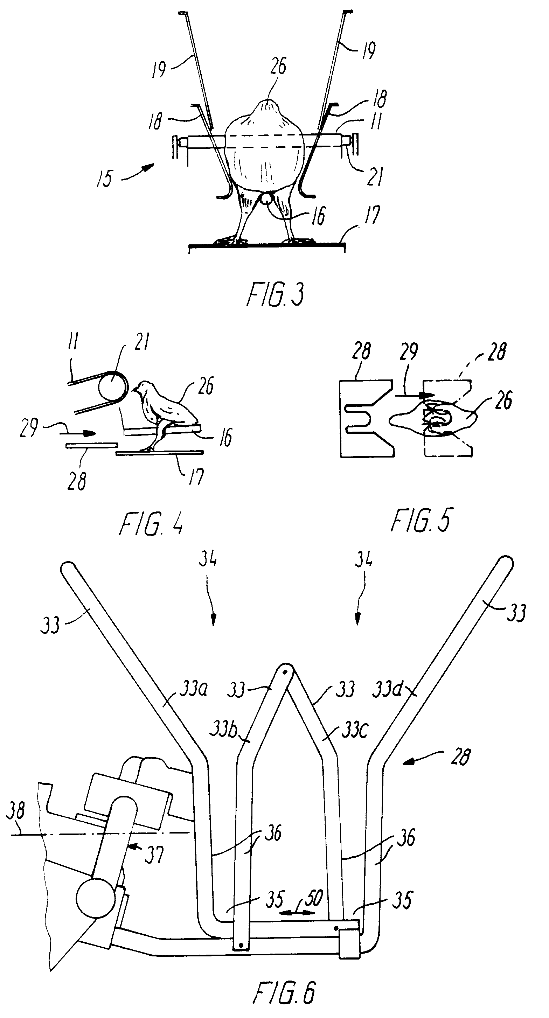

When the chickens arrive to the collection station 15, they will by guide plates 18 and 19 be passed to a position as shown in Fig. 3, showing a chicken standing with its bill facing the subconveyor 11, the legs straddling over the stick 16, the feet standing on the table 17. The stick 16 prevents the chicken from sitting on the table 17 and the legs are therefore accessible to be gripped by means of a catching means.

Figs. 4 and 5 illustrate the same situation as Fig. 3, but from other angles, various parts being deleted for the sake of clearness. A catching means 28 only schematically shown in Figs. 4 and 5 is moved from a position in front of the chicken backwards in relation thereto to the position shown in dashed line by the arrows 29 in Fig. 5, in which the catching means 28 has gripped the legs of the chicken.

Fig. 6 shows the catching means 28 viewed from above. The catching means 28 includes a shackle 33 with four branches 33a, 33b, 33c and 33d, which are substantially designed as a W or as two adherent Y's.

The shackle 33 thus forms two openings 34 adjoining a bottom part 35. As it appears from the drawings the parts 36 of the shackle 33 that define the bottom part 35 are substantially parallel and their mutual distance is determined so that they can grip between them and retain the leg of a chicken. In the illustrated example the shackle is at one end suspended in a mechanism 37 with a horizontal axis of rotation 38. The branches of the shackle 33 are interconnected so that the branch 33a is hinged to the branch 33c and the branch 33b is hinged to the branch 33d and the branch 33c, respectively. Moreover, the branch 33a at the bottom parts 35 may slide in relation to the branch 33d, as shown by the double arrow 50, and the mechanism 37 is arranged to control this sliding.

It will be recognized that sliding away of the branch 33a from the branch 33d, will cause the distance between the parts 36 of the right and the left side, respectively, of the W to increase and vice versa.

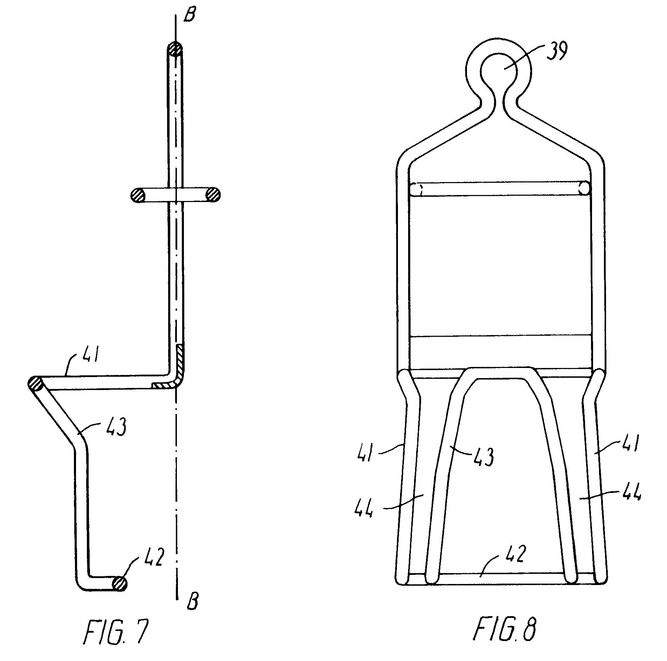

Figs. 7 and 8 show a slaughter shackle 48 including a top portion with an eye 39 for suspension e.g. in a chain conveyor. The top portion is integral with a lower position which like the top portion may be made from round steel, that is general as regards current slaughter shackles. The lower portion includes two side members 41 which extend a distance substantially perpendicularly from the general plane BB of the slaughter shackle and after a bend incline downwards towards a bottom member 42. An intermediate member 43 which as it appears from Fig. 7 extends in the same face as the side members 41 and which as it appears from Fig. 8 is substantially U-shaped is fixed on the bottom member 42 between the side members 41, in order to form together with the side members 41 two slits 44 of such a width that they can receive and retain the legs of a chicken so as is known from current slaughter shackles.

The catching means and the slaughter shackle according to the invention are used as shown to the right in Figs. 1 and 2. The catching means 28 are advanced in a path as shown by the arrow 45 so as to successively catch a chicken in the station as described with reference to Figs. 3 to 5. After a chicken has been caught by its legs, the catching means 28 is moved further, and in drawing the chicken out of the collector station 15, the chicken falls forwards, the catching means 28 swinging around its axis of rotation 38, the chicken is made to be suspended with its head downwards. Then the catching means and the chicken are rotated so that the chicken is advanced sidewise. The catching means is passed further onto a wheel arrangement 46 where it joins a slaughter shackle suspended in a chain conveyor 47. The catching means 28 is thereby held in over the horizontal upper part of the side members 41 of the slaughter shackle. The chicken will thus hang in the catching means 28 having its legs extending through the slits 44 of the slaughter shackle 48. At this moment the branches 33a and 33d of the catching means' 28 shackle are allowed to slide from each other and the chicken is thus released from the catching means 28 and falls a little, its feet being caught by the slits 44 in slaughter shackle 48. The chicken is so transferred to the slaughter shackle.

## Claims

1. A slaughter shacle comprising an upper part adapted to be suspended, e.g. in a chain conveyor, and a lower part comprising two upwardly open and downwardly closed slits (44) placed side by side, **characterized** in that the part (41,43) of the slaughter shackle including the slits upwardly extends out from a plane (BB) of the slaughter shackle that is vertical in use, and that the slits (44) are open vertically upwards from said part.

2. A poultry-catching means, **characterized** in that it includes a flat portion with two inwardly converging openings (34) placed side by side and each associated to a bottom part (35) with substantially parallel side edges and a bottom edge, that one side edge (36) and/or the bottom edge of each bottom part is releasably in order to be movable after release away from the other edges, and that said portion is pivotal about a substantially horizontal axis (38).

3. A method for suspending live poultry, particularly chickens, by the legs, whereby a piece of poultry is caught by the legs in that
a catching means
comprising a flat portion with two inwardly converging openings (34) placed side by side and each associated to a bottom part (35) with substantially parallel side edges and a bottom edge, said portion being pivotal about a substantially horizontal axis (38),
has its flat portion moved towards the legs of the poultry, that the legs pass into each their opening (34), further into each their bottom part (35) and are moved along by the catching means, and
that the flat portion together with the poultry is rotated around the horizontal axis (38) so, that the poultry is will be suspended with the head downwards,
**characterized** in that
the catching means with the poultry is brought to a position,
in which the bottom parts (35) are placed over a part
of a slaughter shackle, comprising two upwardly open and downwardly closed slits (44) that are open vertically upwards from said part which upwardly extends out from a plane (BB) of the slaughter shackle that is vertical in use,
and in which the legs extend through each their slit (44), and
that the catching means is released,
one side edge (36) and/or the bottom edge of each bottom part being releasable in order to be movable after release away from the other edges,
whereby the legs of the poultry slide through the slits until they are stopped by the feet.
